# EUROPÄISCHE PATENTANMELDUNG

(11) **EP 0 890 530 A2**
(43) Veröffentlichungstag der Anmeldung: **13.01.1999**
(21) Anmeldenummer: 98112853.1
(22) Anmeldetag: 10.07.1998
(51) Int. Cl.: B65D 88/30

(54) **Logistiksystem, insbesondere für Baustellen**

(30) Priorität: 20.08.1997 DE 19736101; 10.07.1997 DE 29712310 U
(71) Anmelder: BAYOSAN WACHTER GmbH & Co.KG, D-87541 Hindelang/Allgäu (DE)
(72) Erfinder: Wachter, Anton, 87541 Hindelang (DE); Graff, Nicolaus, 87541 Hindelang (DE)
(74) Vertreter: Fiener, Josef

(57) **Zusammenfassung**

Zur Vereinfachung der Baustellenversorgung mit Baugeräten und/oder Baustoffen, insbesondere Stück- oder Schüttgütern, wird ein Logistiksystem vorgeschlagen, wobei wenigstens ein mit einem LKW transportierbarer Transportbehälter für Baustoffe und Baustellenzubehör vorgesehen ist, der vom Hersteller (H) und/oder einer Kommissionierstelle (K) weiter zur Baustelle mit einer Absetzkippvorrichtung (2) transportierbar und dort absetzbar, sowie nach Aufladen mittels der Absetzkippvorrichtung wiederum von der Baustelle zur Kommissionierstelle oder zum Hersteller zurückbringbar ist.

## Beschreibung

Die Erfindung betrifft ein Logistiksystem gemäß den oberbegrifflichen Merkmalen des Anspruches 1 und ein hierfür geeignetes Transportbehältersystem.

Bei der Baustellenversorgung mit Baustoffen ist im allgemeinen zum einen die Verteilung von Sackware mittels Paletten und zum anderen die Verteilung von Schüttgütern durch Baustellensilos gebräuchlich. Als weitere Verfahren der Baustoffversorgung sind direkte Anlieferung, z. B. von großen Isoliermatten oder die Anlieferung von Sand, Ziegel und dergleichen, direkt vom Hersteller, zu nennen. Für kleinere Baustoffmengen wird häufig ebenso verfahren. Dies bedeutet, daS eine erhebliche Anzahl von Anfahrten verschiedener Baustellenversorgungsfahrzeugen notwendig ist, um eine Baustelle komplett zu versorgen. Bei größeren Lieferungen von z. B. Dämmstoffmatten oder Isolierplatten fallen zudem erhebliche Entladungskosten von Großraumfahrzeugen an.

Als Alternative zur häufigen Frequentierung einer Baustelle durch verschiedene Baustellenfahrzeuge werden von manchen Baustellenversorgern Kommissionierlager betrieben, um die Anzahl der Anfahrten und die daraus erwachsenden Kosten zu verringern. Diese Kommissionierung der Baustoffe hat zum Nachteil, daß der Kommissionierer entsprechend große Lager vorhalten muß, die ebenfalls erhebliche Kosten verursachen. Für Großhändler, Zwischenhändler und auch Warenmärkte oder Großmärkte gilt, daß häufig nicht die notwendigen Lagerkapazitäten im Stadtbereich, insbesondere überdachten Lagerkapazitäten, bereitgestellt werden können. Als weiterer Nachteil dieser häufig praktizierten Verfahrensweise ist der erhebliche Aufwand bei der Umschichtung bzw. beim Umladen von Baustoffen zu nennen.

Zur Baustellenversorgung sind auch bereits sogenannte Abrollkipper bekannt, wobei auf einer Plattform mehrere Baustoffsilos und/oder Baugeräte aufgesetzt sind (z.B. gemäß der DE 39 27 646 A1). Dieses Logistiksystem weist jedoch den Nachteil auf, daß die Plattform des Abrollkippers nur als eine große Einheit (entsprechend der Ladefläche) absetzbar bzw. aufnehmbar ist, so daß die gesamte Einheit an einer einzigen Stelle abgeladen werden muß und dann die einzelnen Baustoffe und/oder Baugeräte zu der jeweils benötigten Stelle transportiert werden müssen. Dieses System eignet sich somit für die Versorgung kleinerer Baustellen, z.B. bei Einfamilienhäusern, kaum. Zudem fährt der Lkw auf dem Rückweg unbeladen.

Zudem ist bei diesen Abrollkippern nachteilig, daß die Ladung, z.B. aufgestapelte Sackware, während des Lade- bzw. Entladevorganges verrutschen oder sogar ein Stapel umfallen kann. Hierdurch kann ein erheblicher Schaden bis hin zur Unbrauchbarkeit des Baustoffes oder Maschinenbeschädigungen der Baugeräte entstehen.

Ziel eines verbesserten Logistiksystems ist es deshalb, den Weg vom Hersteller zum Endverbraucher bzw. Baustelle möglichst kurz zu halten und die dafür notwendigen Frachtwege bzw. Maschineneinsätze und Aufwendungen so gering wie möglich zu gestalten. Ein weiteres Ziel ist die Einsparung von Lagerraum und die vereinfachte, baustellengerechte Handhabung.

Diese Aufgabe wird gelöst durch ein Logistiksystem gemäß den Merkmalen des Anspruches 1 und einen darauf abgestimmten Transportbehälter.

Das vorgeschlagene Logistiksystem erlaubt es, Lagerraum sowohl beim Hersteller und Kommissionierer, als auch beim Verbraucher bzw. an der Baustellen einzusparen, da der dabei verwendete, bevorzugt vollständig geschlossene Transportbehälter (Logistikbox) zugleich Transportbehältnis, Lagerbehältnis und günstiges Aufbewahrungslager für Baustoffe und Baugeräte ist. Zudem wird die Frachtkapazität durch beliebige Kombination der Behälter untereinander optimal genutzt. Durch die Be- bzw. Entladung mittels einer Absetzkippvorrichtung, wie diese auch für Großsilos verwendet wird, kann der Transportbehälter ein sehr großes Fassungsvermögen aufweisen und insbesondere auf der Ladefläche eines Lkws und/oder Anhängers mit einem oder mehreren Kleinsilos zu jeweils einer Transporteinheit (anstatt eines Großsilos) kombiniert werden. Hierdurch wird die Variabilität wesentlich erhöht, da z.B. ein Großsilo angeliefert werden kann und auf dem Rückweg ein leeres Kleinsilo und ein (teilweise) leerer Transportbehälter zur Kommisionierstelle zur Wiederbefüllung zurückgebracht werden kann (oder umgekehrt). Zudem ist hierdurch eine Be- bzw. Entladung dieser Logistikbox in gleichbleibender Lage möglich, so daß kein Verrutschen der Ladung auftritt.

Dabei sind diese Einheiten gegeneinander je nach Baustellenbedarf kombinierbar bzw. austauschbar und mit der gleichen Ladevorrichtung in Form eines Absetzkippers zu handhaben. Somit werden an der Baustelle keine besonderen Ladegeräte wie Gabelstapler, Entladekran usw. mehr benötigt, bzw. für andere Einsätze frei. Das Transportfahrzeug stellt somit eine autarke, eigenständige Einheit dar, so daß die Baustellenversorgung ohne Hilfe weiterer Personen, z.B. auch in den Nachtstunden erfolgen kann. Die wesentlichen Vorteile sind somit:
- Weniger Verlust durch Diebstahl oder Witterungseinflüsse sowie durch Transportschäden.
- Keine teuren Lagerbauten beim Hersteller bzw. Großhändler und Kommissionierer bzw. Baustoffhändler.
- Weniger Fahrten durch komplette Versorgung und Entsorgung der Baustelle.
- Gleichzeitige Versorgung der Baustelle durch entsprechende Logistikboxen und mit diesen Boxen kombinierbaren Silos. Von Vorteil ist dabei auch, daß sowohl die Boxen als auch die Silos in mehrfacher Ausführung mittels eines Rahmengestells gekoppelt oder im ungekoppeltem Zustand transportiert, entladen und aufgenommen werden können.

Hinsichtlich der vorgeschlagenen Logistikbox ist insbesondere die multifunktionelle Gestaltung des Transportbehälters wesentlich. Dieser Transportbehälter dient nicht nur zum Transport auf dem Transportfahrzeug, sondern dient zugleich als Lager- und Verkaufs- bzw. Ausstellungsbehältnis, wie auch als abgeschlossenes, sicheres Bereitstellungsmittel auf Baustellen für Baugeräte, Baustoffe und sonstiges Gerät. Durch die Stapelbarkeit des Behälters läßt sich zudem Lagerraum einsparen.

Diese Gestaltung des Transportbehälters erlaubt auch den witterungsgeschützten Zugang sowie einfache manuelle oder maschinelle Beschickung und Entnahme von Palettenware, Baugeräten oder sonstigen Baustoffen. Insbesondere ist der kubische Transportbehälter von seinen Innenabmessungen für die Beladung mit Euro-Paletten ausgelegt und erlaubt gleichzeitig auch die bestmögliche Raumausnutzung für Isolierstoffe bzw. Dämmplattenbündel, insbesondere mit einem erweiterbaren Überbau.

Von Bedeutung ist hierbei insbesondere, daß gegenüber den sonstigen Wechselcontainern für Absetzkipper mit einer maximalen Breite von 1800 mm bei einem Abstand der Hubarme von 2000 mm, nunmehr eine Breite von ca. 1950 mm realisierbar ist, da kein Kettengehänge mehr erforderlich ist, sondern die Logistikbox an Aufnahmeelementen (Zapfen oder Taschen) im oberen Bereich durch Teleskopbewegung der Hubarme von unten her erfaßt wird. Damit ist mit einem minimalen seitlichen Spalt von einigen Millimtern die freie Schwenkbarkeit der eingefahrenen Hubarme ermöglicht und zugleich eine maximale Raumausnutzung erreicht. Für den erweiterbaren Überbau kann sogar eine Breite von 2550 mm bzw. die maximal zulässige Transportbreite realisiert werden.

Zur Kostenminimierung ist diese Logistikbox (Transportbehälter) bevorzugt so ausgelegt, daß die üblichen Halbzeugabmessungen, wie Rohre, Eckleisten, Profile (im allgemeinen 3 oder 4m lang) ohne Zuschnitt eingesetzt werden können. Von Vorteil ist dabei auch, daß der Transportbehälter seitliche Verstärkungs- bzw. Rahmenprofile aufweist, so daS nur dünne Beplankungsbleche benötigt werden, wodurch die Innenraumabmessung nur minimal geringer ist als die Außenabmessung. Dies führt dazu, daß eine optimale Raumausnutzung zur Einbringung von Paletten gegeben ist. Dabei sind diese Blechteile so zusammengefügt sind, daß sich eine maximale Formsteifigkeit ergibt, auch für die Krafteinleitungen ( seitliche Aufnahmezapfen für die Absetzkipper-Schwenkarme) zum Handhaben des Behälters, wobei diese Verbindungsstellen mit erhöhter Steifigkeit ausgeführt werden.

So kann die Anbringung bzw. die Einbringung von Lasthaken bzw. Aufnahmezapfen bevorzugt im Dach oder in umlaufenden Profilen erfolgen. Diese Profilierungen der Logistikbox dienen auch dazu, z.B. ein Netz aufzunehmen oder als Zwischenboden für unten eingebrachten Sack-Paletten zu oben abzulegenden Dämmstoffplatten, Eckleisten und anderen leichten Gegenständen. Zudem kann dieses Logistikmodul auch in einer offenen Ausführung rahmenartige Aufnahmen oder Lagerungen für kleinere Kommissionierbehälter in Form von Paletten, sog. Big Bags oder sonstigen Behältnissen in hängender Formaufweist.

Die Verriegelung des Transportbehälters ist bevorzugt so gestaltet, daS die Logistikbox ohne Beisein des Bauherrn oder Bauleiters auf der Baustelle abgesetzt werden kann, z. B. in den Abend- oder Nachtstunden. Die Zugänglichkeit ist erst durch Abruf einer (Nummer)-Codierung für das Schloß vom Lieferanten gegeben. Mit der Verriegelung des Transportbehälters ist auch bevorzugt ein auf dem Außenbereich der Zugangstür angebrachte Lieferschein oder sonstige Transportpapiere gesichert.

Nachfolgend wird ein bevorzugtes Ausführungsbeispiel anhand der Zeichnungen näher erläutert und beschrieben. Hierbei zeigen:
- Fig. 1: ein Transportfahrzeug zur Verwendung in dem Logistiksystem mit mehreren Kombinationen von Transportbehältern;
- Fig. 2: eine schematische Darstellung des Logistiksystems mit einer zentralen Kommissionierstelle; und
- Fig. 3: eine perspektivische Darstellung eines in dem Logistiksystem verwendeten Transportbehälters (Logistikbox) in zwei unterschiedlichen Ausführungen.

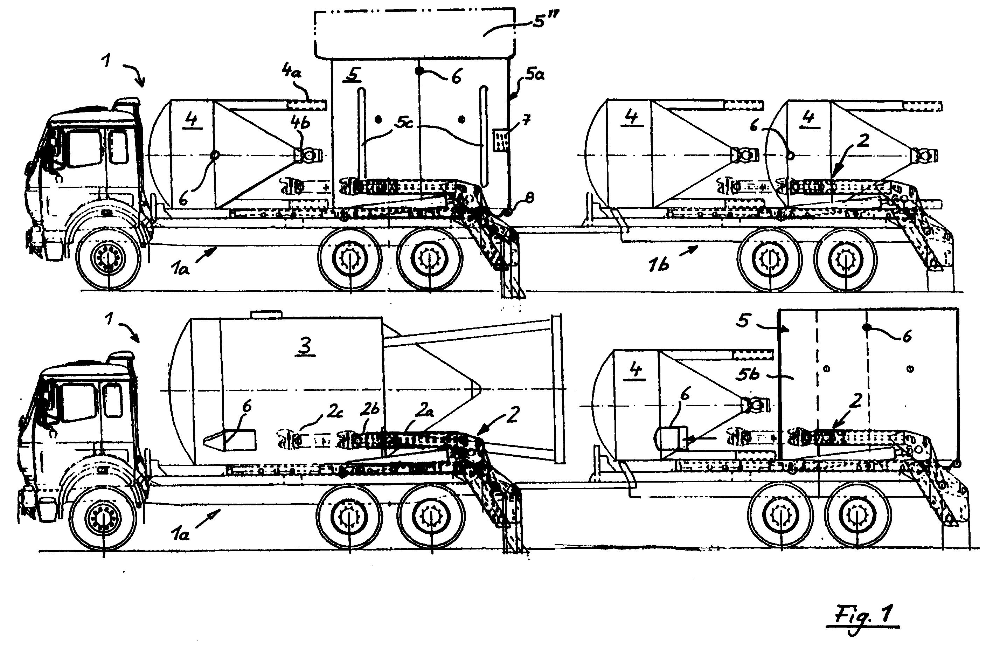

In Fig. 1 ist ein Lkw-Transportfahrzeug 1, bestehend aus einem Zugwagen 1a und einem Anhänger 1b dargestellt. Das Transportfahrzeug 1 ist hierbei mit einer Absetzkippvorrichtung 2 versehen, die am rückwärtigen Ende der Ladefläche 1c des Zugwagens 1a und/oder des Anhängers 1b angeordnet ist. Die Absetzkippvorrichtung 2 weist jeweils zwei seitliche Hub- bzw. Schwenkarme 2a auf, deren freie Enden 2c durch Bewegung der zugeordneten Teleskoparme 2b mit zapfen- oder taschenförmigen Aufnahmeelementen 6 an den aufzunehmenden Ladeeinheiten ankuppelbar ist. Die Ladeeinheiten werden hier durch ein Großsilo 3, ein Kleinsilo 4 und einen quaderförmigen Transportbehälter 5 gebildet. Von wesentlicher Bedeutung ist hierbei, daS diese Einheiten durch die Absetzkippvorrichtung 2 untereinander austauschbar sind, so daS anstatt eines die gesamte Ladefläche 1c des Zugwagens 1a bzw. des Anhängers 1b einnehmenden Großsilos 3, auch ein Kleinsilo 4 und ein quaderförmiger Transportbehälter 5 geladen werden können, wie dies in Fig. 1 oben für den Zugwagen 1a bzw. rechts unten für den Anhänger 1b dargestellt ist.

Der Transportbehälter 5 weist hierbei ein Zugangsschloß 7 auf, mit dem der quaderförmige Transportbehälter 5 sicher verschlossen werden kann. Bevorzugt ist das Zugangsschloß 7 des Transportbehälters 5 als Zahlenschloß ausgebildet, wobei der entsprechende Nummerncode von dem Lieferanten des Transportbehälters 5 abgerufen werden kann. Hierdurch wird eine diebstahlsichere Aufbewahrung der darin enthaltenen Baugeräte und/oder Baustoffe sichergestellt. Zudem kann an der Logistikbox 5 auch ein GPS-System 5e (vgl. Fig. 3) vorgesehen sein, um deren Position auf (entlegenen) Baustellen jeweils feststellen zu können.

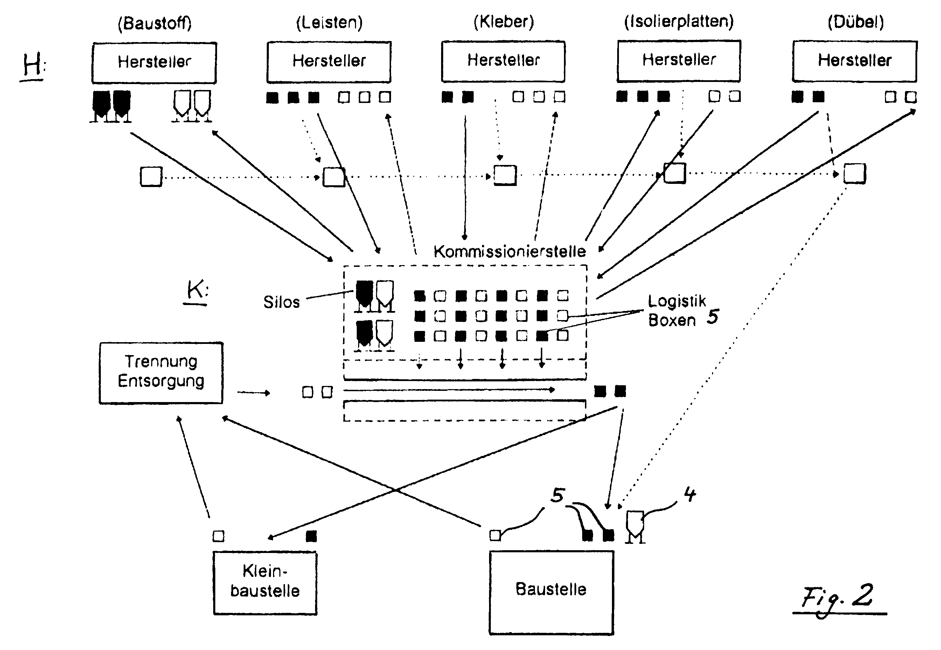

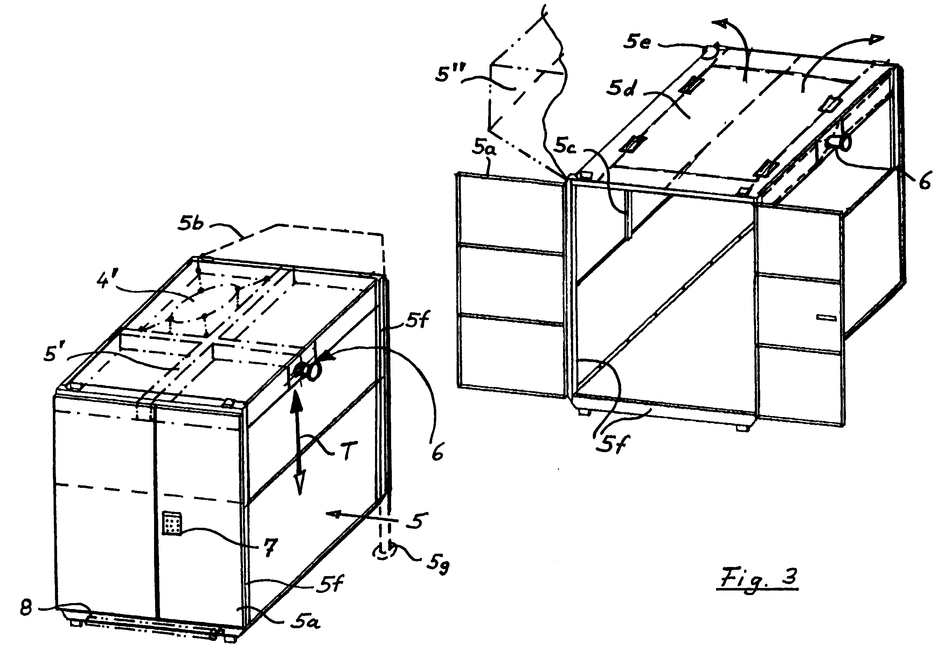

In Fig. 2 ist ein Ablaufdiagramm für die Kommissionierung verschiedener Baustoffe dargestellt, wobei eine Vielzahl von Großsilos 3 und Kleinsilos 4 schematisch dargestellt sind, während die Transportbehälter 5 als Quadrate dargestellt sind, Die geschwärzte Ausführung soll hierbei für die beladenen Transport- bzw. Ladeeinheiten 3, 4 und 5 stehen, nämlich für die Großsilos 3, die Transportbehälter 5 in geschlossener oder offener Ausführung 5' als Transportrahmen (vgl. Fig. 3), sowie auch die vorzugsweise mitverwendeten Kleinsilos 4 oder Big Bags 4' in Verbindung mit dem Transportrahmen 5'.

Wie aus Fig. 2 ersichtlich ist, kann jeweils eine Transporteinheit bestehend aus Großsilo 3, und/oder Kleinsilo 4 und/oder Transportbehälter 5 wahlweise je nach Bedarf auf der Baustelle zusammengestellt werden. Hierdurch ergibt sich eine besonders große Variabilität. Von besonderer Bedeutung ist hierbei, daß mit einem Transportfahrzeug 1 bestehend aus Zugwagen 1a und Anhänger 1b eine komplette Versorgung einer Baustelle direkt vom Hersteller H oder der Kommissionierstelle K aus vorgenommen werden kann. So reicht im allgemeinen der z. B. in dem Großsilo 3 enthaltene Grundputz, der in dem Kleinsilo 4 enthaltene Zierputz und die in dem Transportbehälter 5 enthaltenen Zubehörteile (Eckleisten, Klebemörtel, Isolierplatten, Dübel, Schrauben usw.) zum Verputzen eines Einfamilienhauses aus. Somit können mit einer einzigen Anfahrt durch das Transportfahrzeug 1 die wesentlichen benötigten Bauteile bereitgestellt werden.

Wie in Fig. 1 oben dargestellt, ist für eine kleinere Baustelle oder eine Ergänzungslieferung auch eine andere Kombination möglich, nämlich hier eine Logistikbox 5 und drei Kleinsilos 4, z.B. jeweils gefüllt mit einer entsprechenden Baustoffsorte, z.B. Innenputz, Dämmputz und einem Farbputz. Es sei darauf hingewiesen, daß nach Abladen dieser in der oberen Reihe dargestellten Kombination dann die in der unteren Reihe zwischenzeitlich entleerte Baustoff-Silo-/Boxkombination mit der Absetzkippvorrichtung 2 wieder aufgeladen werden können.

Somit ermöglicht die Ausführung des Transportfahrzeuges 1 mit der Absetzkippvorrichtung 2, insbesondere in der Ausführung als sogenannter Zwei-Taschen-Silosteller die Aufnahme (teilweise) leerer Behälter bzw. Silos mit mehreren Tonnen Gewicht. Somit können leere Transportbehälter 5 und/oder Silos 3, 4 auf dem Rückweg zur Kommissionierstelle K und dortigen Trennung bzw. Entsorgung mitgenommen werden. Es sei darauf hingewiesen, daß hierbei die Transportbehälter 5 und/oder Kleinsilos 4 beliebig durch die Absetzkippvorrichtung 2 aufgenommen werden kann, also nicht nur eine komplette Plattform, sondern wahlweise einzelne Transportbehälter 5. Hierdurch wird eine besonders große Variabilität erreicht.

In Fig. 3 ist der Transportbehälter 5 vergrößert dargestellt. Hieraus ist insbesondere die "dünnwandige", aber zugfeste Ausgestaltung der Beplankung zu den Aufnahmezapfen 6 hin ersichtlich. Zudem verläuft um die mit dem Zugangsschloß 7 versehene Zugangstüre 5a herum und die gegenüberliegende Stirnseite ein Rahmenprofil 5f, um die Formsteifigkeit zu erhöhen. Diese Rahmenprofile 5f sind durch entsprechene Längsverstrebungen verbunden und insbesondere in Bereich der zapfenartigen Aufnahmeelemente 6 versteift, wie dies in der rechten Hälfte strichliert angedeutet ist. Hierdurch kann auch das Dach 5d als Deckel oder Rolldach ausgebildet sein, um Ware mit dem Baustellenkran nach oben zu entnehmen. Die Zugangstür 5a ist zur leichten Be- oder Entladung weit zu öffnen, so daß von dem flachen Boden auch mit einem Gabelhubwagen Paletten mit Sackware oder Baugeräten entnommen werden können. An der Seitenwand sind zudem Sichtschlitze oder schmale Öffnungen 5c vorgesehen, um den Ladezustand der Logistikbox 5 kontrollieren zu können.

Von der Außenform her kann der Transportbehälter 5 auch an einer oder beiden Stirnseiten eine Verengung oder Abschrägung 5b aufweisen, um bei der Beladung zwischen das jeweilige Untergestell 4a des Kleinsilos 4 einzugreifen, so daß die Ladefläche 1c optimal ausgenutzt wird. Das Untergestell 4a der Kleinsilos 4 kann in bevorzugter Ausführung auch einschieb- oder seitlich wegklappbar sein, wie dies in Fig. 1 dargestellt ist. Dadurch kann der Transportbehälter 5 mittels eines Verschiebeschlittens oder der ggf. mehrfach teleskopierbaren Arme 2b der Absetzkippvorrichtung 2 bis an den Trichterbereich 4b des Kleinsilos 4 anliegend in raumsparender Weise auf der Ladefläche 1c positioniert werden.

In der linken Hälfte der Fig. 3 ist eine weitere, weitgehend offene, rahmenartige Ausführung 5' der Transport- und Ladeeinheit dargestellt, die beispielsweise durch Abnahme der Beplankungsbleche und/oder der Zugangstüre(-n) 5a des geschlossenen Transportbehälters 5 erstellt werden kann. In dieses Tragegestell 5' mit kreuzweiser Unterteilung in vier oder auch sechs oder acht Felder können kleinere Behälter 4', insbes. sog. Big Bags eingehängt oder auf sonstige Weise befestigt werden.

Somit kann die gesamte Ladeeinheit mittels des Tragegestell 5', das auch seitlich beplankt sein kann, durch Aufnahme an den Zapfen 6 mit der Absetzkippvorrichtung 2 be- und entladen werden. Bei der Entladung können auch nur einzelne der Kleinbehälter 4' vom Tragegestell 5' gelöst werden und das Transportfahrzeug 1 auf der Baustelle beispielsweise alle zwanzig Meter einen der Kleinbehälter 4' durch Lösen von dem jeweils nach hinten abgeschwenkten Tragegestell 5'absetzen, beispielsweise für Pflasterarbeiten, wobei die Pflastersteine in den genannten Big Bags transportiert werden.

Da diese Kleinbehälter 4' häufig eine unterschiedliche Bauhöhe aufweisen, ist das Tragegestell 5' bevorzugt durch eine Verschiebebewegung zwischen den beiden Rahmenprofilen 5f entsprechend dem Pfeil T höhenverstellbar. Dies kann auch durch ein Scherenhubgestänge oder dergleichen erfolgen. Hierdurch wird zudem erreicht, daß sich das hier im Deckenbereich befindliche Tragegestell 5' bis auf den Boden der Lade- und Transporteinheit 5 absenken läßt, um als flache, raumsparende Palette zu dienen, wobei dann auch die Rahmenprofile 5f zur Einsparung von Lagerraum nach unten flach zusammenklappbar sein können.

Um bei dem Absetzvorgang einzelner Kleinbehälter 4', z.B. dem Lösen aus einem Verbund von sechs Big Bags, eine zu starke Schräglage des an den Aufnahmezapfen 6 pendelnden Tragegestells 5' zu vermeiden, können an der Unterseite im Eckbereich der Rahmenprofile 5f auch eine oder mehrere Rollen 8 vorgesehen sein, die im Gegensatz zu Abrollkipperplattformen jedoch erst bei einer größeren Schräglage mit dem Boden in Berührung kommen, also gegenüber der palettenartig ausgebildeten Bodenfläche erhöht angeordnet sind (vgl. Fig. 1).

In den hohlen Rahmenprofilen 5f können auch verstellbare Füsse 5g zum Niveauausgleich auf der meist unebenen Stellfläche auf der Baustelle vorgesehen sein. Die Füsse 5g können dabei in einfacher Weise in knapp über dem Boden horizontal (an der Absetzkippvorrichtung 2) hängender Stellung des Transportbehälters 5 gelöst werden und so auf den jeweiligen Untergrund eingestellt werden. Von weiterer Bedeutung ist auch die in Fig. 3, rechte Hälfte und Fig. 1, oben dargestellte Erweiterungsmöglichkeit des Transportbehälters 5, insbesondere in Form eines Oberbaus 5'', der gegenüber der durch die Absetzkippvorrichtung 2 definierten Breite von knapp zwei Metern im Bereich über den seitlichen Aufnahmeelementen 6 sogar eine Breite von ca. 2,5 Metern aufweisen kann. Dieser "pilzförmige" Überbau 5'' mit der maximal zulässigen Fahrzeugbreite und -höhe eignet sich insbesondere für den Transport leichter Dämmstoffe. Der Überbau 5'' kann dabei durch Teleskopbewegung des Daches des Transportbehälters 5 nach oben erreicht werden, oder auch in bevorzugter Form durch Auseinanderklappen der Dachhälften 5d entsprechend der eingezeichneten Pfeile um 90 bis 180°.

## Patentansprüche

1. Logistiksystem, insbesondere zur Baustellenversorgung mit Baustoffen und/oder Baugeräten, insbesondere Stück- oder Schüttgütern, unter Verwendung einer Vielzahl von auf Transportfahrzeugen transportierbaren Transportbehältern, dadurch gekennzeichnet, daß
die Transportbehälter (5) unter Ausnutzung der Ladefläche (1c) des Transportfahrzeuges (1) kombinierbar sind und vom Hersteller (H) zur Kommissionierstelle (K) und weiter zur Baustelle mit einer Absetzkippvorrichtung (2) einzeln aufbzw. abladbar und als Transporteinheit (1a, 1b) transportierbar sind, sowie von der Baustelle zur Kommissionierstelle (K) oder zum Hersteller (H) in frei auf der Ladefläche (1c) zusammenstellbarer Kombination zurückbringbar sind.

2. Logistiksystem nach Anspruch 1,
dadurch gekennzeichnet, daß
in den Transportbehältern (5) verschiedene Baustoffe und Bauzubehör, insbesondere Befestigungs-, Dämm- und Isoliermaterial vorkommissionierbar sind, die gemeinsam in einer Transporteinheit (1a, 1b) auf eine Baustelle transportierbar sind.

3. Logistiksystem nach Anspruch 1 oder 2,
dadurch gekennzeichnet, daß
die Transportbehälter (5) jeweils eine Codierung, insbesondere einen Nummerncode aufweisen, der beim Lieferanten erfragbar ist.

4. Transportbehältersystem, insbesondere für ein Logistiksystem nach einem der Ansprüche 1 bis 3,
dadurch gekennzeichnet, daß
die Länge/Breite/Höhe der Transportbehälter (5, 5') auf Norm-Paletten oder Halbzeug-Normabmessungen angepaßt ist und von der Absetzkippvorrichtung (2) im wesentlichen in Horizontallage vom Transportfahrzeug (1) ab- bzw. aufsetzbar ist.

5. Transportbehältersystem nach Anspruch 4,
dadurch gekennzeichnet, daß
der Transportbehälter (5) jeweils in seinem oberen Bereich Aufnahmeelemente (6), insbesondere Zapfen zur Aufnahme durch die bevorzugt im mehr als Zwei Stufen teleskopierbaren Schwenkarme (2a, 2b, 2c) der Absetzkippvorrichtung (2) aufweist.

6. Transportbehältersystem nach Anspruch 4 oder 5,
dadurch gekennzeichnet, daß
der Transportbehälter (5) eine Zugangssperre (7) aufweist, die nur durch eine vom Lieferanten beziehbare Codierung entriegelbar ist.

7. Transportbehältersystem nach einem der Ansprüche 4 bis 6,
dadurch gekennzeichnet, daß
mehrere Transportbehälter (5) übereinanderstapelbar sind, insbesondere durch die Absetzkippvorrichtung (2).

8. Transportbehältersystem nach einem der Ansprüche 4 bis 7,
dadurch gekennzeichnet, daß
der Transportbehälter (5) bei Verladung mit einem Kleinsilo (4) unmittelbar an dieses anschließt.

9. Transportbehältersystem nach einem der Ansprüche 4 bis 7,
dadurch gekennzeichnet, daß
der Transportbehälter (5) bei Verladung mit einem Kleinsilo (4) in dessen Untergestell (4a) eingreift.

10. Transportbehältersystem nach einem der Ansprüche 4 bis 9,
dadurch gekennzeichnet, daß
der Transportbehälter (5) von einer für ein die Ladefläche (1c) einnehmendes Großsilo (3) ausgelegten Absetzkippvorrichtung (2) aufnehmbar ist und in Kombination mit einem Kleinsilo (4) oder einem zweiten Transportbehälter (5) die Ladefläche (1c) des Transportfahrzeuges (1) einnimmt.

11. Transportbehältersystem nach einem der Ansprüche 4 bis 10,
dadurch gekennzeichnet, daß
der Transportbehälter (5) mit einem GPS-System (5e) zur Positionsbestimmung ausgerüstet ist.

12. Transportbehältersystem nach einem der Ansprüche 4 bis 11,
dadurch gekennzeichnet, daß
der Transportbehälter (5) jeweils wenigstens eine seitliche Öffnung (5c) zur Kontrolle der Ladungsverteilung aufweist.

13. Transportbehältersystem nach einem der Ansprüche 4 bis 12,
dadurch gekennzeichnet, daß
der Dachbereich (5d) des Transportbehälters (5) zur Be/Entladung zu öffnen ist.

14. Transportbehältersystem nach einem der Ansprüche 4 bis 13,
dadurch gekennzeichnet, daß
ein rahmenartiges Tragegestell (5') mit seitlichen Aufnahmeelementen (6) vorgesehen ist, an dem mehrere Kleinbehälter (4'), insbes. Big Bags als eine Ladeeinheit einhäng- oder befestigbar und im abgesetzten Zustand mittels Schnellverschlüssen lösbar sind.

15. Transportbehältersystem nach einem der Ansprüche 4 bis 14,
dadurch gekennzeichnet, daß
am unteren Eckbereich, insbesondere an den umlaufenden Rahmenprofilen (5f), Rollen (8) angeordnet sind, die gegenüber der Aufstandsfläche erhöht angebracht sind.

16. Transportbehältersystem nach einem der Ansprüche 4 bis 15,
dadurch gekennzeichnet, daß
der Transportbehälter (5, 5') die maximale Breite zwischen den Schwenkarmen (2a) der Absetzkippvorrichtung (2) einnimmt und die Aufnahmeelemente (6) wenigstens in einer die Verschwenkbewegung der eingefahrenen Schwenkarme (2a) ermöglichenden Höhe angeordnet sind.

17. Transportbehältersystem nach einem der Ansprüche 4 bis 16,
dadurch gekennzeichnet, daß
der Transportbehälter (5) an seinem Bodenbereich verstellbare Füsse (5g) zum Niveauausgleich aufweist, wobei die Füsse (5g) bevorzugt innerhalb der Rahmenprofile (5f) angeordnet und fernsteuerbar sind.

18. Transportbehältersystem nach einem der Ansprüche 4 bis 17,
dadurch gekennzeichnet, daß
der Transportbehälter (5) einen teleskopierbaren oder erweiterbaren Überbau (5'') aufweist, der bevorzugt oberhalb der Aufnahmeelemente (6) eine größere Breite als die Absetzkippvorrichtung (2) besitzt.
